# EUROPÄISCHE PATENTSCHRIFT

(11) **EP 1 398 747 B1**
(45) Veröffentlichungstag und Bekanntmachung des Hinweises auf die Patenterteilung: **30.05.2012**
(21) Anmeldenummer: 03090231.6
(22) Anmeldetag: 24.07.2003
(51) Int. Cl.: G08C 17/04, B61L 15/00, B61L 3/22

(54) **Vorrichtung zur Datenübertragung, insbesondere im Schienenverkehr**
Apparatus for transmitting data, especially for railway traffic
Dispositif pour la transmission de données, en particulier pour trafic ferroviaire

(30) Priorität: 12.09.2002 DE 10244115
(43) Veröffentlichungstag der Anmeldung: 17.03.2004
(73) Patentinhaber: SIEMENS AKTIENGESELLSCHAFT, 80333 München (DE)
(72) Erfinder: Meier, Michael, 38116 Braunschweig (DE)

(56) Entgegenhaltungen:
- EP-A- 0 030 121
- EP-A- 0 424 664
- WO-A-99/23504

## Beschreibung

Die Erfindung betrifft eine Vorrichtung zur Datenübertragung gemäß dem Oberbegriff des Anspruchs 1. Für die kontinuierliche Übertragung von HF-Daten von einer ortsfesten Station zu beweglichen Einrichtungen, insbesondere Schienenfahrzeugen, ist die Verwendung von gekreuzten Linienleiterschleifen im Rahmen der sogenannten linienförmigen Zugbeeinflussung weit verbreitet. Dabei ist längst der Strecke ein Linienleiter verlegt, der in der ortsfesten Station mit Sendeeinrichtungen und gegebenenfalls auch Empfangseinrichtungen für die HF-Datenübertragung verbunden ist. Die auf der Strecke verkehrenden Fahrzeuge sind mit Empfangs- und gegebenenfalls Sendeeinrichtungen ausgestattet, die mittels einer Antenne mit dem Linienleiter induktiv gekoppelt sind. Die Hin- und Rückleitung der Linienleiterschleifen sind in bestimmten Abständen gekreuzt. Das Überfahren der Kreuzstellen wird detektiert und kann somit zur Gewinnung von Ortsmarken dienen. Durch die Kreuzstellen ergibt sich außerdem eine Entkopplung der Linienleiterschleife hinsichtlich verschiedener Umgebungsbedingungen. Im Bereich der Kreuzstellen sinkt die Empfangsspannung des Linienleiters für die Datenübertragung beim Überfahren der Kreuzstelle nahezu auf Null. Um ständig ein Nutzsignal zur Verfügung zu haben, werden deshalb zwei Antennen am Fahrzeug in Fahrtrichtung hintereinander angeordnet. Auf diese Weise befindet sich stets mindestens eine Antenne über dem Linienleiter. Da jedoch an der Kreuzstelle Hin- und Rückleiter des Linienleiters wechseln, sind die Phasen der induzierten Spannungen in den Linienleiter vor und nach der Kreuzstelle um 180° phasenverschoben. Um den Pegeleinbruch an der Kreuzstelle auszugleichen, wird ein Summensignal aus beiden Antennensignalen unter Berücksichtigung ihrer gegenseitigen Phasenlage gebildet. Dazu ist es bekannt, entweder eines der beiden Signale im Verhältnis zum anderen Antennensignal um 90° in der Phase zu verschieben und dann beide Signale zu addieren (Siemens-Linienzugbeeinflussung LZB 500) oder eines der beiden Antennensignale ortsabhängig um 180° zu drehen (Siemens-Linienzugbeeinflussung LZB 80, LZB 700 ZB/M) und dann die beiden phasengleichen Signale zu summieren. Beide Varianten sind mit erheblichem Aufwand für phasensensitive Komponenten verbunden. Bei der 90°-Variante ist ein genauer Phasenschieber erforderlich, während bei der 180°-Variante mit phasenrichtiger Addition ein Umschaltsignal generiert werden muss, das die 180°-Phasendrehung nur solange initiiert, wie nur eine der beiden Antennen die Kreuzstelle passiert hat.

Durch Demodulation des Antennensignals ausschließlich anhand des Amplituden- und Frequenzparameters, wie aus der WO-A-9923504 bekannt, entfällt die Berücksichtigung der gegenseitigen Phasenlage der beiden Antennensignale. Eine Vorzeichenentscheidung, die durch die zeitweilige 180°-Phasenverschiebung verursacht ist, wird nicht getroffen. Stattdessen erzeugt die Demodulation für jedes Antennensignal ein eigenes demoduliertes, amplitudenbehaftetes Rechtecksignal. Die beiden Rechtecksignale werden hernach summiert. Da an der Kreuzstelle der Signalpegel derjenigen Antenne, die gerade die Kreuzstelle passiert, bis auf Null abnimmt, liefert diese Antenne keinen Nutzanteil zu dem demodulierten Signal. In der Summation erscheint somit nur das Signal der zweiten Antenne, die sich nicht über der Kreuzstelle befindet. Der Rauschanteil im Bereich der Kreuzstelle ist gegenüber dem Datensignal aus dem zur zweiten Antenne gehörenden Demodulator vernachlässigbar. Gegenüber den bekannten, oben geschilderten trägerfrequent addierenden Empfängern ergibt sich der Vorteil, dass die beiden Antennensignale mit beliebigen Phasenwinkeln zueinander verarbeitet werden können, wodurch die Anforderungen an die Empfangskomponenten wesentlich vereinfacht sind.

Bei Linienleiter-Anordnungen mit mehreren Schleifen, die mit unterschiedlichen Dateninhalten gespeist werden, ermöglicht die aus der oben genannten WO-A bekannte Lösung außerdem an den Bereichsgrenzen den Empfang der Daten sowohl aus der von der hinteren Antenne noch nicht vollständig passierten Schleife, als auch den Datenempfang aus der nachfolgenden Schleife mittels der vorderen Antenne, die den Grenzbereich zwischen benachbarten Linienleitern bereits passiert hat.

Der Erfindung liegt die Aufgabe zugrunde, eine Vorrichtung zur Datenübertragung der gattungsgemäßen Art anzugeben, die mit einfachen Baugruppen eine phasenunabhängige Signalverarbeitung ermöglicht.

Die Aufgabe wird mit den kennzeichnenden Merkmalen des Patentanspruchs gelöst.

Um die Auswertung des Summensignals, das die von der Strecke zum Fahrzeug zu übertragende Information repräsentiert, zu vereinfachen, ist vorgesehen, dass dem Summierglied ein Amplitudenbegrenzer nachgeschaltet ist. Verzerrungen des Summensignals infolge der Pegeleinbrüche eines Antennensignals an den Kreuzstellen werden dadurch unterdrückt. Durch die Amplitudenbegrenzung verbleiben lediglich Rechteckpulse mit High- oder Low-Pegel, wobei die Entscheidungsschwelle für die High-Pegelhöhe vorzugsweise ungefähr der halben Pegelhöhe des Summensignals entspricht.

Da die beiden Demodulatoren ebenfalls jeweils mit einem Amplitudenbegrenzer verbunden sind, werden Verzerrungen durch regelmäßige Pegeleinbrüche beim Überfahren der Lücken zwischen benachbarten Linienleiterschleifen zumindest teilweise unterdrückt. Darüber hinaus lassen sich über die den beiden Demodulatoren nachgeschalteten Amplitudenbegrenzer die Ausgangssignale der beiden Signalverarbeitungsstränge separat auswerten.

Nachfolgend wird die Erfindung anhand figürlicher Darstellungen näher erläutert. Es zeigen:
- Figur 1: eine schematische Darstellung einer Streckenkonfigu- ration,
- Figur 2: die wesentlichen Komponenten einer Datenübertra- gungsvorrichtung und
- Figur 3: die Streckenkonfiguration gemäß Figur 1 mit zugeord- neten Signalverläufen.

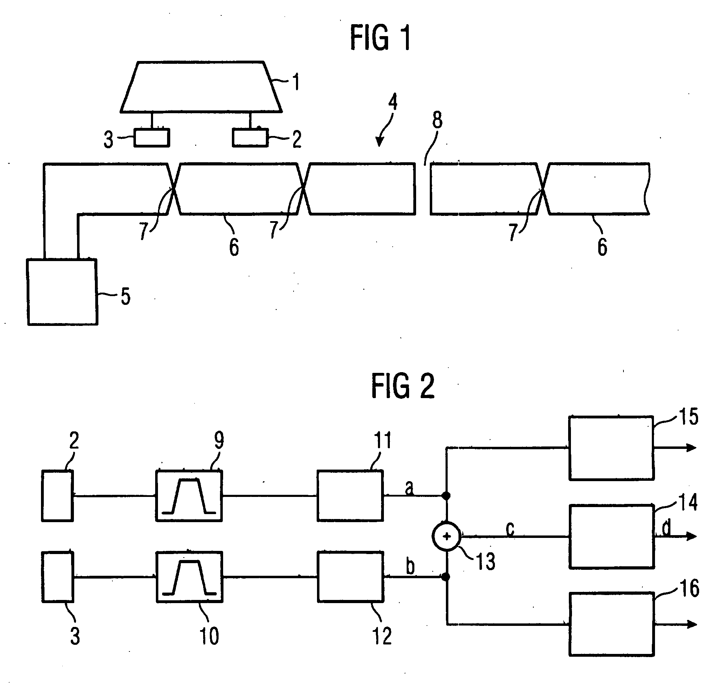

In Figur 1 ist ein Schienenfahrzeug 1 dargestellt, das über zwei in Fahrtrichtung hintereinander angeordneten Fahrzeugantennen 2 und 3 induktiv mit einer Linienleiteranordnung 4, die entlang einer Bahnstrecke fest verlegt ist, gekoppelt ist. Die Linienleiteranordnung 4 besteht aus mindestens einer Streckeneinrichtung, die eine mäanderförmig verlegte Linienleiterschleife 6 mit einem hochfrequenten Signal beaufschlagt, dessen Pulsfolge einer bestimmten Information entspricht. Diese Information wird von den Antennen 2 und 3 des Schienenfahrzeugs empfangen und einer Signalverarbeitungseinrichtung zur Demodulation zugeführt. Die Antennen 2 und 3 sind derart beabstandet, dass zu jedem Zeitpunkt maximal eine der beiden Antennen 2 und 3 über einer Kreuzstelle 7 der mäanderförmigen Linienleiterschleife 6 befindlich sein kann. Da sich an den Kreuzstellen 7 das Nutzsignal bis auf Null abschwächt und somit eine Empfangslücke bei der über der Kreuzstelle 7 befindlichen Antenne 2 oder 3 auftritt, muss die zweite Antenne 3 oder 2 diese Empfangslücke quasi überbrücken. Ähnliche Probleme treten auch im Bereich benachbarter Linienleiterschleifen 6 auf, da hier eine Lücke 8 zu überbrücken ist.

Die wichtigsten Baugruppen zur Auswertung der beiden Antennensignale veranschaulicht Figur 2. Die Antennen 2 und 3 sind über Bandpassfilter 9 und 10 mit Demodulatoren 11 und 12 beschaltet. Deren Ausgangssignale a und b sind einem Summierglied 13 zugeführt. Die Ausgangssignale c des Summiergliedes 13 beaufschlagen einen Amplitudenbegrenzer 14, dessen Ausgangssignale d Low- und High-Zuständen entsprechen, die den Inhalt des zu übertragenden Datentelegramms wiedergeben. Optional können die Demodulatoren-Ausgangssignale a und b der beiden Signalverarbeitungsstränge über Amplitudenbegrenzer 16 und 15 separat ausgewertet werden.

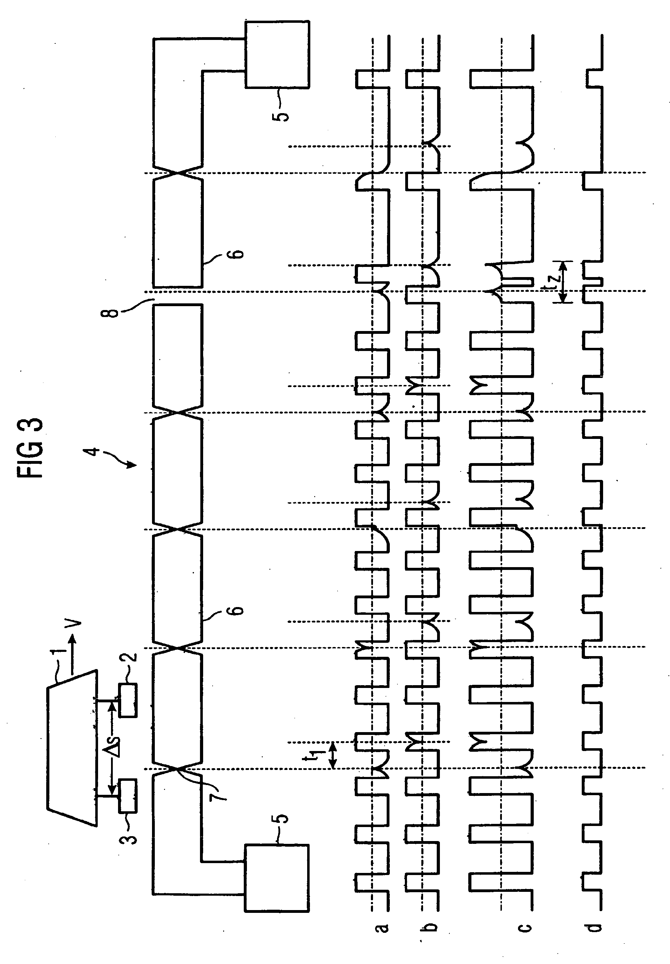

Die Funktionsweise der Datenübertragungsvorrichtung gemäß Figur 2 ist aus den Signalverläufen der Figur 3 ersichtlich. Das Schienenfahrzeug 1 bewegt sich mit einer Geschwindigkeit v in Pfeilrichtung. Der Abstand zwischen den beiden Antennen 2 und 3 ist mit Δs bezeichnet. In Abhängigkeit von der Geschwindigkeit V und dem Antennenabstand Δs überfahren die beiden Antennen 1 und 2 in einem bestimmten zeitlichen Abstand t₁ die Kreuzstellen 7. Es ist ersichtlich, dass an den Kreuzstellen 7 Pegeleinbrüche der Demodulator-Ausgangssignale a und b auftreten. Die Besonderheit der Demodulaotren 11 und 12 besteht darin, dass die erzeugten Ausgangssignale a und b ohne gegenseitige Auslöschung addierbar sind. Das wird dadurch erreicht, dass der 180°-Phasensprung, der an den Kreuzstellen 7 durch Wechsel der Hin- und Rückleitung der Linienleiterschleife 6 verursacht ist, quasi ausgeglichen wird, indem das Ausgangssignal a bzw. b des Demodulators 11 bzw. 12 in Abhängigkeit von der Amplitude des Trägersignals gebildet wird und somit keine Vorzeichenentscheidung getroffen werden muss. Der Signalverlauf c veranschaulicht das Summensignal am Ausgang des Summiergliedes 13. Wie an den Kreuzstellen 7 sind durch die Ausschaltung der Phasensprünge auch an den Lücken 8 zwischen benachbarten Linienleiterschleifen 6 Demodulation und Summenbildung problemlos möglich.

Der Amplitudenbegrenzer 14 formt das Ausgangssignal c des Summiergliedes 13 in diskrete Hight- und Low-Zustände um. Aus dem Signalverlauf d ist ersichtlich, dass mittels der beiden dargestellten Linienleiterschleifen 6 unterschiedliche Telegramminhalte übermittelt werden.

Während der Zeit t_{z} können bei Bedarf die einzelnen demodulierten Datensignale der Amplitudenbegrenzer 15 und 16 verwendet werden.

Die Erfindung beschränkt sich nicht auf das vorstehen angegebene Ausführungsbeispiel. Vielmehr ist eine Anzahl von Varianten denkbar, welche auch bei grundsätzlich anders gearteter Ausführung von den Merkmalen der Erfindung Gebrauch machen.

## Patentansprüche

1. Vorrichtung zur Datenübertragung im Schienenverkehr von einer streckenseitigen Linienleiter-Anordnung (4) zu einer fahrzeugseitigen Empfangseinrichtung, wobei die Empfangseinrichtung zwei in Fahrtrichtung hintereinander angeordnete Antennen (2, 3) aufweist, die mit dem längs der Strecke verlegten, in bestimmten Abständen gekreuzten Linienleiter induktiv gekoppelt sind, wobei jede Antenne (2, 3) über einen Bandpass (9, 10) mit einem Demodulator (11, 12) verbunden ist, dessen Ausgangssignal (a, b) von der Amplitude des Eingangssignals abhängig ist und wobei die Ausgangssignale (a, b) der Demodulatoren (11, 12) einem Summierglied (13) zugeführt sind,
**dadurch gekennzeichnet,**
**dass** das Summierglied (13) und die Demodulatoren (11, 12) jeweils mit einem Amplitudenbegrenzer (14, 15, 16) verbunden sind, wobei die Ausgangssignale (a, b) der beiden Demodulatoren (11, 12) über die mit diesen verbundenen Amplitudenbegrenzer (15, 16) separat auswertbar sind.

## Claims

1. Apparatus for data transmission in rail traffic from a trackside line conductor arrangement (4) to a vehicle-side receiving device, with the receiving device having two antennas (2, 3), which are arranged one behind the other in the direction of travel and are inductively coupled to the line conductor, which is laid along the track and is crossed at specific intervals, with each antenna (2, 3) being connected via a bandpass filter (9, 10) to a demodulator (11, 12) whose output signal (a, b) is dependent on the amplitude of the input signal, and with the output signals (a, b) of the demodulators (11, 12) being supplied to an adder (13),
**characterized**
**in that** the adder (13) and the demodulators (11, 12) are respectively connected to an amplitude limiter (14, 15, 16), in which case the output signals (a, b) of the two demodulators (11, 12) can be evaluated separately via the amplitude limiters (15, 16) connected to them.

## Revendications

1. Dispositif de transmission de données, dans le trafic ferroviaire, d'un agencement ( 4 ) de conducteur de ligne du côté de la voie à un dispositif de réception du côté du véhicule, dans lequel le dispositif de réception comporte deux antennes ( 2, 3 ), qui sont disposées l'une derrière l'autre dans le sens de la marche et qui sont couplées inductivement avec le conducteur de ligne, posé le long de la voie et croisé à des intervalles déterminés, chaque antenne ( 2, 3 ) étant reliées par un passe-bande ( 9, 10 ) à un démodulateur ( 11, 12 ), dont le signal ( a, b ) de sortie dépend de l'amplitude du signal d'entrée et les signaux ( a, b ) de sortie du démodulateur ( 11, 12 ) étant envoyés à un élément ( 13 ) sommateur,
**caractérisé**
**en ce que** l'élément ( 13 ) sommateur et les démodulateurs ( 11, 12 ) sont reliés respectivement à un limiteur ( 14, 15, 16 ) d'amplitude, les signaux ( a, b ) des deux démodulateurs ( 11, 12 ) pouvant être exploités séparément par ces limiteurs ( 15, 16 ) reliés.
